# EUROPEAN PATENT SPECIFICATION

(11) **EP 1 323 259 B1**
(45) Date of publication and mention of the grant of the patent: **05.10.2011**
(21) Application number: 01960813.2
(22) Date of filing: 22.08.2001
(51) Int. Cl.: H04L 9/32

(54) **SECURED IDENTITY CHAIN**
GESICHERTE IDENTITÄTSKETTE
CHAINE D'IDENTITE SECURISEE

(30) Priority: 22.08.2000 FI 20001857
(43) Date of publication of application: 02.07.2003
(73) Proprietor: SmartTrust Systems Oy, 00510 Helsinki (FI)
(72) Inventor: LEHTONEN, Veera, FIN-00150 Helsinki (FI); MÄTTÖ, Mikko, FIN-02150 Espoo (FI); PIETILÄINEN, Henna, FIN-02660 Espoo (FI)
(74) Representative: Söderman, Lisbeth Karin
(86) International application number: PCT/FI2001/000739
(87) International publication number: WO 2002/017557

(56) References cited:
- WO-A1-00/64098
- WO-A1-00/69113
- WO-A1-99/21321
- WO-A1-99/35783

## Description

The presented invention is concerned with telecommunications systems. Especially, the invention is concerned with a method for easing the implementation of a certificate.

### BACKGROUND ART

Operations demanding security, for instance various electronic commerce circumstances, require that the parties can electronically verify their identity in order to use the selected services. This verification of identity can be carried out with the help of for instance a user sign and a password concerned with it or with the help of a special certificate. In order to enable identity verification, the user first has to register him-/herself in order to receive the certificate described ahead.

A digital certificate or an electronic identity means data or a file, which is used solely to identify people and various resources through a telecommunications network, like the Internet network. When using e-mail applications, the certificates are typically sent as attachments of the actual e-mail. Furthermore, digital certificates enable a secure and confidential connection between two different parties. Digital certificates are granted by a trusted third party (TTP, Trusted Third Party), such as a certificate authority (CA, Certificate Authority). The task of the trusted third party is to verify the identity of the certificate owner and to sign the certificate in such a way that it cannot be changed without detection. When the trusted third party has signed the certificate, the certificate owner can present it to other people and factions in order to prove his/her identity and to form secret telecommunications connections.

Typically, the certificate consists of information concerning the owner and the granter of the certificate. The certificate contains for instance the following items. The name of the certificate owner, and possibly other data, which identifies the owner, an e-mail address and a public key. The public key can be used for the encryption of sensitive information to be sent to the owner of the certificate. Furthermore, the certificate contains for instance the name of the faction who published the certificate, an identification number and time data, which defines the timeline under which time the certificate is valid.

When creating a digital certificate, the third trusted party signs it digitally. Because of the signature, the contents of the certificate cannot be altered without the alteration being detected. Digital certificates are generally based on public key encryption (PKC, Public Key Cryptography), where a public key and a secret key are used. In the public key method, the use of the public key and the secret key are strongly tied to each other. It is only possible to decrypt an encryption with the secret key, which has been made taking advantage of the public encryption key. The public key can freely be published and spread around to the parties which want it, but the secret key must be held in a secure place, to where other factions don't have access. The digital certificate ties together the identity, which the third trusted party has verified, and the public key.

The public key method can also be used for signing and verifying a message. Both a public and a secret signature key have been defined to the sender of the message. In a digital signature the sender forms a hash of the message and signs the hash with his/her own secret signature key. The recipient of the signed message unpacks the signature from around the hash with the sender's public key. The origin of the message can be verified in such a way that the recipient compares the hash calculated by him from the unpacked received message to the one in the message. If the hashes match, the message has been signed with the secret key corresponding to the public key in question.

A period of validity is often defined into the certificate. The certificate can furthermore be annulled by the third trusted party. Hence, a new certificate must be granted to the owner of the certificate. When the party trusting the certificate receives a new certificate, it has to be checked if the new certificate has been annulled. In an environment limited by its resources, an additional load, created by certificate status enquiries in a short period of time, is wanted to avoid. Usually, the party trusting the certificate checks the validity of the certificate for instance from a certificate revocation list (CRL, Certificate Revocation List) or through an on-line enquiry.

WO publication 99/35783 is mentioned as prior art. It presents an authentication system with an ability to implement a system for providing short-lived certificates. A key distribution center generates and stores key pairs and certificate templates. A user who authenticates to the center prompts the system to recertify the user's public key by generating and signing a short lived certificate.

### PURPOSE OF THE INVENTION

The purpose of the invention is to eliminate said disadvantages or at least significantly reduce them.

Especially, the purpose of the invention is to present a new kind of method, with which the replacement of an expired or an annulled certificate with a new certificate can be carried out.

### SUMMARY OF THE INVENTION

The presented invention is concerned with the replacement of a granted certificate with a new certificate, after it has been annulled or has expired.

The invention targets on a method for the replacement of a certificate with a new certificate, when the certificate granted to the owner of the certificate is annulled or when it expires. In the method, a signed certificate message is received. The signature has been made in an advantageous way in accordance with the public key method. From said certificate, data is stored and said certificate is verified authentic before the storage of the certificate.

In accordance with the invention, the earlier identity from said signed certificate message is compared to the identity concerned with the certificate in use. Identity means a certain kind of network identity (NID, Network Identity), which has been attached with encryption- and/or signature keys during the creation of it. If the identities match, the certificate belonging to said earlier identity will be removed from the group of trusted certificates and the new certificate indicated by the new identity in said certificate message is added to the group of trusted certificates. A condition for acceptance can be that, the trusted time concerned with the new certificate is newer than the trusted time concerned with the earlier certificate. Because the user of the certificate trusts, on the basis of the certificate message, that the new certificate in the certificate message is valid, he/she doesn't automatically check the validity of the new certificate with the third trusted party. Even though, a check of this kind can be done if the recipient of the certificate wants to.

The user of the certificate doesn't necessarily have trusted time data in his/her use. By courtesy of this the trusted time data can be sent to the user. On the basis of that the user can determine, if any of the certificates he/she uses no longer is valid. If the user notices a certificate to be expired, he/she can send a request for a new certificate.

The user of a certificate can have in his/her possession an expired or an annulled certificate. If the user sends a message to the receiver using an identity concerning an expired or an annulled certificate, a new certificate concerning the recipient and a new identity concerning the certificate can automatically be sent to the user.

In a normal situation the creation and publishing of a new certificate annuls the certificate in earlier use. In some cases it can still be sensible to use two certificates, and the identities concerning them, parallel to each other for some time. In this case the certificate granted earlier will be valid for some time even though the new certificate has already been granted. When the user of the certificate sends a message using the earlier granted but still valid identity, the sent message is accepted. After the acceptance, the new certificate and the identity concerning the certificate user will still be sent to the certificate user.

Furthermore, the invention targets on a method for the handling of certificates stored in an identity module, which identity module consists of a data handling device, a memory device, which is connected to said data handling device and a card certificate which is stored in the memory device. Furthermore, the identity module comprises an application, which uses the certificates stored in the identity module and a data transmission device, which is connected to said data handling device and to which an interface is arranged for the transfer of data between an external device and the identity module. The identity module can be a SIM (SIM, Subscriber Identity Module), a WIM (WIM, Wireless Identity Module), a security module or other comparable separate secure circuit or other such device or component expressing identity. The identity module can be fixed or detachable and it has to be in the control of the owner of the identity.

In the method, a signed certificate message is received to the identity module. The signature has been made advantageously in accordance with the public key method. From said certificate, data is stored to the identity module and said certificate is verified authentic with said card certificate before the storage of the certificate. A card certificate means any certificate in a higher level in the hierarchy, with which a certificate in the lower level of the hierarchy can be verified.

In accordance with the invention, the earlier identity in said signed certificate message is compared to the identity concerning the certificate in use, located in the memory device, before the storage of the certificate. With identity is referred to the network identity, which has been attached with encryption and signature keys during the creation of the identity. If the identities match, the certificate belonging to said earlier identity is removed from the group of trusted certificates in the memory device and the new certificate indicated by the new identity in said certificate message is added into the memory device in the group of trusted certificates. A condition for acceptance can be that the trusted time concerning the new certificate is newer than the trusted time concerning the earlier certificate. Because the user of the certificate trusts, on the basis of the certificate message, that the new certificate in the certificate message is valid, he/she doesn't automatically check the validity of the new certificate with the trusted third party. This kind of check can still be made, if the recipient of the certificate so wants.

The identity module doesn't necessarily have trusted time data in use. By courtesy of that trusted time data can be sent to the identity module. On the basis of that it can be determined if any of the certificates in the identity module no longer are valid. If it is noticed that a certificate has expired, a request for a new certificate can be sent from the identity module.

The identity module can have an expired or annulled certificate. If a message is sent from the identity module to the recipient using an identity concerning an expired or annulled certificate, a new certificate concerning said recipient and the identity concerning the new certificate can automatically be sent to the identity module.

In a normal situation the creation and publishing of a new certificate annuls the certificate in use earlier. In some case it can be sensible to use two certificates and the identities concerning them parallel to each other for some time. In this case even the certificate granted earlier will be valid for some time even though the new certificate has been granted. When a message is sent from the identity module using the still valid certificate granted earlier, the sent message will be accepted. After the acceptance, the new certificate and identity concerning the owner of the certificate will still be sent to the identity module.

In one application of the invention said certificate is declined if it is verified to be untrustworthy before its storage or usage. Further when trustworthy equipment and programs are used the certificates and the transactions done with them can hence be trusted.

In one application of the invention the public key from said certificate and the identity concerning the public key is stored. Other data can also be stored. This way the memory used by the certificate can significantly be reduced. When the certificate is wanted to be used it first has to be verified by the card certificate.

The identity module of the invention for the administration of the certificates comprises components said ahead. Furthermore, the identity module comprises reception means for the reception of a certificate to the identity module. Storage means for the storage of data to said memory device from said certificate and verification means for the verification of authenticity of said certificate with said card certificate before the storage of the certificate.

In accordance with the invention the identity module comprises of means for comparison, for the comparison of the earlier certificate stored in the memory device to the new identity in the signed certificate message. Furthermore, the identity module comprises removal means for the removal of the certificate belonging to the earlier identity from the group of trusted certificates and means for addition for the adding of the new certificate indicated by the new identity to the group of trusted certificates.

In one application of the invention the identity module comprises means for comparison, for the comparison of the trusted time concerning the new certificate in the certificate message to the trusted time concerning the earlier certificate. The identity module also comprises means for acceptance, for the acceptance of the new certificate only if the trusted time concerning the new certificate is newer than the trusted time concerning the earlier certificate. Furthermore, the identity module can comprise reception means for the reception of the trusted time, information means of enquiry for the sending of an enquiry of the validity of the certificate, means for rejection for the rejection of said certificate if it is verified untrustworthy before it is stored or used.

Because of the presented invention the amount of necessary short messages needed for the replacement of a certificate is as small as possible. In the best-case scenario an old certificate can be annulled and a new certificate taken into use with one message.

Furthermore, because of the presented invention, the replacement of the service provider's key doesn't require the certificate user to contact the signer of the certificate concerning the service provider. Because of the invention there will be no sudden spike as a result of simultaneous status enquiries, because these kinds of status enquiries don't necessarily have to be done.

Because of the presented invention, the load concerning the updating of certificates can be divided to multiple factions. The updater of the certificate doesn't necessarily have to be the granter of the certificate.

Because of the presented invention, the status of the certificate belonging to the new identity doesn't have to be checked. Thus, additional checking operations of the certificate are avoided. Furthermore, because of the invention, the user of the certificate doesn't need to have trusted time data in his use in order to use his certificates properly.

### LIST OF DRAWINGS

In the following the invention is described in detail using embodiment examples, where
Figure 1 illustrates the functioning of an invention according method,
Figure 2 illustrates a certain advantageous flowchart example of the presented invention's functions, and
Figure 3 illustrates a certain identity module in accordance with the invention.

### DETAILED DESCRIPTION OF THE INVENTION

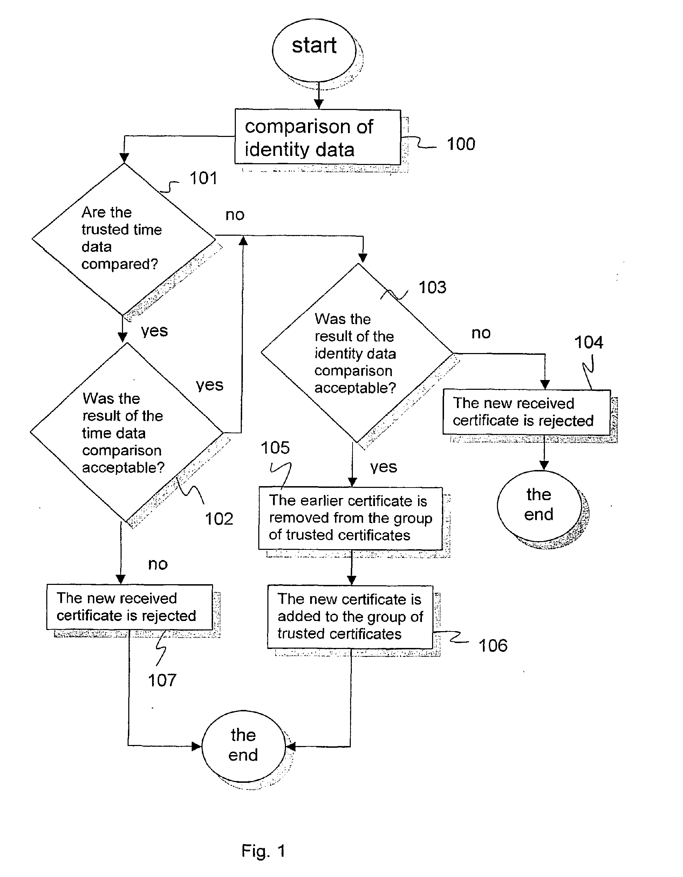

In figure 1 the functioning of a method in accordance with the invention is presented. Before block 100, a signed certificate message is received. From the received certificate data is stored. Furthermore, the certificate is verified authentic before the storage of the certificate. In accordance with block 100 the earlier identity data from said signed certificate message is compared to the identity data concerned with the certificate in use. Consequently the certificate message consists of identity data concerning two separate certificates: the identity concerning the certificate granted earlier and a new identity concerning the certificate granted later. The user of the certificate compares the earlier identity data in the certificate message to the identity data concerning the used certificate.

The certificate in the possession of the user and the certificate in the certificate message can contain trusted time data. Furthermore, if assurance is wanted of that the certificate in the signed certificate message is newer than the certificate in the user's possession, a comparison of time data can be done, block 101. With this, it is tried to ensure that, the certificate user doesn't accept certificates to his use in the wrong order, i.e. to ensure that the next accepted certificate is always newer than the one before. Furthermore, block 101 can mean that the validity time of the new certificate is compared to the most recent trusted time known. If the result of the comparison of trusted time data, block 102, is that the certificate in the signed certificate message has been granted earlier than the certificate in use, the new received certificate will be rejected, block 107.

If the identity data comparison result is acceptable, you proceed to block 105 via block 103. If the compared identities differ from each other, the new received certificate is rejected, by proceeding to block 104. In accordance with block 105 the certificate belonging to said earlier identity is removed from the group of trusted certificates and the new certificate indicated by the new identity in the certificate message is added to the group of trusted certificates.

In the above demonstrated description of the method in accordance with the presented invention a certain certificate identity chain is created. The identity chain is created so that a group of identities belong to the same certificate owner, which are bound into a queue with a signature. The used encryption and/or signature keys are tied to a certain identity so the keys change at the same time the identity changes. The user of the certificate doesn't have to go through the whole identity chain, the user can skip a certain or some certificates.

In one application of figure 1, the users using a certain certificate are known. Thus a type of 'push'-message can be sent to the user, when it is wanted to annul an earlier certificate and take into use a newer certificate.

In one example in accordance with figure 1, a message is sent in certain intervals to the certificate user, the message containing data of the trusted time. On the basis of this message, the certificate user can determine if any of the certificates in possession have expired.

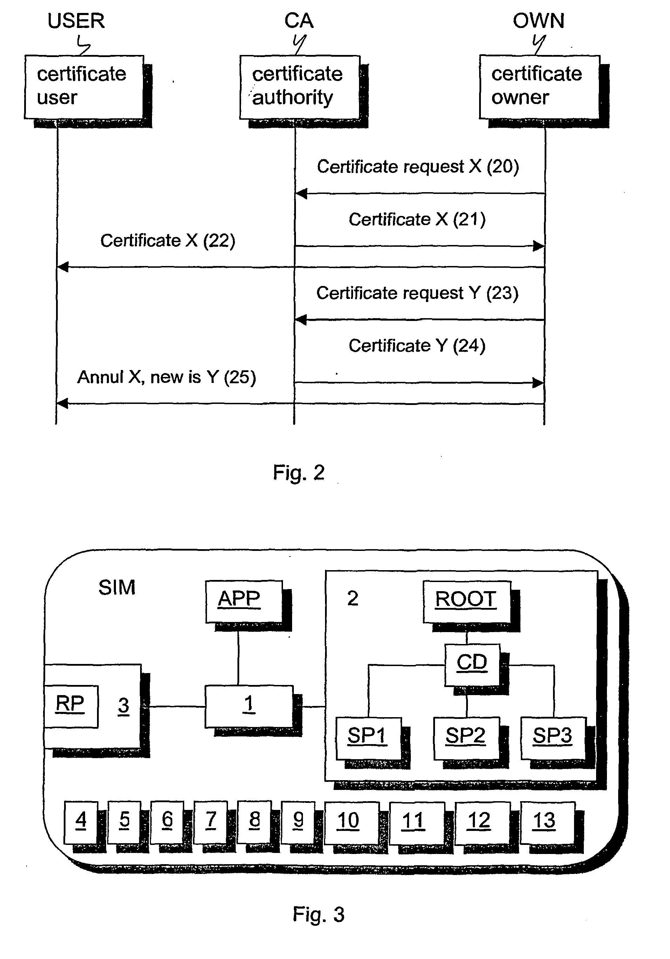

In figure 2 a certain signal flowchart example in accordance with the presented invention is illustrated. The example in accordance with figure 2 consists of the certificate user USER, the certificate authority CA and the certificate owner OWN. With certificate user USER is advantageously referred to the mobile terminal and the subscriber identity module (SIM, Subscriber Identity Module) concerning it. With this it is not wanted to restrict the certificate user in any way, any other device or user is also possible. The certificate owner OWN is for instance a bank, shop or any comparable unit.

The certificate owner OWN wants for itself a certificate and sends a certificate request to the certificate authority CA, arrow 20. The certificate authority CA sends the requested certificate to the certificate owner OWN, arrow 21. The certificate owner OWN sends the granted certificate X to the certificate user USER, arrow 22.

There is a time of validity in every granted certificate, during which the usage of the certificate is defined. A situation might come up where the certificate owner OWN wants to replace the certificate granted earlier X with a new certificate. The certificate X might have expired or the certificate owner OWN might want to replace certificate X with a new certificate for some other reason. The certificate owner OWN sends a certificate request Y to the certificate authority for the acquisition of a new certificate. The certificate authority CA sends the certificate Y to certificate owner OWN, arrow 24. A special network identity is concerned with every certificate, which has during its creation been attached with encryption and/or signature keys.

The certificate owner OWN sends a message of annulment to the certificate user USER, which at least consists of the network identity concerning the certificate to be annulled X and the network identity concerning the new certificate Y, arrow 25. The certificate user USER compares the network identity of the used certificate to the network identity concerning the certificate to be annulled X acquired from the certificate owner OWN. If the network identities match, certificate X will be removed from the group of trusted certificates and the new acquired certificate Y is added to the group of trusted certificates. The certificate user USER can if it wants to, check the validity of the received certificate using normal procedures.

When the certificate user receives the certificate concerning the owner of the first certificate, the user has to check the validity of the first certificate. Even though it is illustrated in figure 2 that the certificate owner OWN sends messages to the certificate user USER, the certificate authority CA might just as well be sending the messages.

In view of the presented invention the essential idea is that the message received by the certificate user OWN is signed. The network identity concerning the new certificate is tied to the previous identity with the digital signature of the certificate authority. The new identity is verified with new keys. Hereby a kind of chain is formed, where the new certificate is approved on the basis of the network identity concerning the old certificate. Without the linkage the amount of messages necessary for the replacement of a certificate would be considerably higher.

In figure 3 a certain identity module in accordance with the invention is illustrated. The identity module is advantageously a subscriber identity module (SIM, Subscriber Identity Module), but it can also be a WIM (WIM, WAP Identity Module), a security module or other comparable separate secure circuit or an other device or component, expressing identity, of that kind. The identity module can be fixed or detachable and it has to be in the control of the identity owner.

Into the identity module SIM in accordance with figure 3 belongs a data handling device 1, like a processor, a micro controller or a comparable device, a memory device 2, which is connected to the data handling device 1 and a data transmission device 3, which is connected to the data handling device 1. Furthermore a connection interface RP has been set up into the identity module SIM for the transfer of data to and from an external device, like between a GSM-mobile communications device (GSM, Global System for Mobile communications) and the subscriber identity module SIM.

In addition an application APP belongs or has been stored to the identity module SIM presented in figure 3. The application APP uses the certificates stored in the identity module when in connection to the services of the service provider. Furthermore means for reception 4 for the reception of certificates and means for storage 5 for the storage of data from the certificate to the memory device 2 have been set up into the identity module. In addition the identity module has means for verification 6 for the verification of the received certificate with the card certificate. Card certificate means any certificate in the higher level of hierarchy with which a certificate in a lower level of the hierarchy can be verified. In figure 3 the card certificate can be for instance a ROOT-certificate or a CD-certificate.

The identity module SIM furthermore comprises means for comparison 7, for the comparison of the earlier identity stored in the memory device 2 to the new identity in the signed certificate message. It also consists of means for removal 8, for the removal of the certificate belonging to the earlier identity from the group of trusted certificates and also means for addition 9 for the adding of the new certificate indicated by the new identity in said certificate message to the group of trusted certificates.

The identity module SIM can furthermore comprises means for comparison 7, for the comparison of the trusted time concerning the new certificate in the certificate message to the trusted time concerning the earlier certificate. The validity time of the new certificate can also be compared to the most recent known trusted time using the means for comparison 7. The identity module SIM furthermore comprises means for acceptance 10, for the acceptance of the new certificate only if said trusted time concerning the new certificate is newer than the trusted time concerning the earlier certificate, means for reception 11 for the reception of trusted time data, means for enquiry 12 for the sending of an enquiry concerning the validity of the certificate and means for rejection 13 for the rejection of said certificate if it is verified untrustworthy before the storage or usage of it.

In memory area 2 the presentation of which parties' certificates the identity module can have is in addition a little more specific. ROOT refers to root direction and the certificate concerning it, which has the highest level of trust in the certificate chain. ROOT is often included into the identity module SIM in the manufacturing phase of the identity module SIM. CD refers for instance to the mobile phone operator. SP1, SP2 and SP3 refer to the service providers and the certificates concerning them.

The certificate change concerning the service provider SP is described ahead. The CD-certificate change progresses in a slightly different way. The CD-certificate can only be removed with a revocation message, which the mobile phone operator CD has signed itself. After which the new CD-certificate is added as in the case of the change of the service provider's certificate using the ROOT-certificate. The advantage with such a procedure is that when the ROOT-certificate falls in the wrong hands the CD-certificate still cannot be changed.

The root direction ROOT can revoke it's own certificate by sending a revocation message. This still doesn't have immediate influence on the CD-certificates or the SP-certificates. When the CD-certificate has been revoked the actual SP-certificates will be removed from the identity module SIM. The identity data concerning the certificates can still be stored though. The mobile phone operator CD can if it wants to revoke an SP-certificate without issuing a new one. This happens by sending a revocation message to the identity module SIM. When the SP-certificate is revoked, the identity data and other data concerning the certificates can also be removed from the identity module SIM if necessary.

It is presumed above that the identity module SIM already has in its possession the certificate concerning the certificate owner. If the situation is that the identity module SIM has not yet had in its possession any certificate concerning the certificate owner, the procedure is slightly different. When the identity module SIM wants to receive the service provider's SP first certificate, it sends an encrypted request to the mobile phone operator CD using the keys concerning the CD-certificate. The request furthermore contains a sufficiently long random line of characters, which purpose is to individualize the request. The mobile phone operator CD sends the requested certificate to identity module SIM in a certificate message, which also contains the random line of characters. When the certificate message is received the random line of characters is destroyed. This kind of procedure guarantees that the certificate concerning the service provider SP certifiably was valid after the sent request from the identity module SIM. Simultaneously it is confirmed that the service provider's SP certificate is stored only once.

In normal circumstances the service provider SP only has one valid certificate. When the certificate has to be changed, the service provider first has to request a new certificate. Another option is that, the service provider has two different valid certificates simultaneously. The other certificate is in use and the other in store for the situation when the keys have to be changed. So the certificates are valid at the same time, but the network identities and keys concerning them are different. The certificate in store and the secret keys concerning it has to be stored in a secure place.

With the certificates in the identity module messages can securely be sent to the recipient, for instance to a service provider SP. In some cases it can still be sensible to use two certificates and the identity concerning them parallel for some time. In that case the certificate granted earlier is still valid for some time even though the new certificate has been granted. When a message is sent from the identity module using the earlier granted, but still valid certificate, the sent message will be accepted. After the acceptance the new certificate and identity concerning the certificate owner will still be sent to the identity module. If the service provider SP receives a message from the identity module SIM that has been sent using the expired service provider's SP certificate, the service provider will not accept the message and will automatically send a new valid certificate to the identity module SIM.

The invention is not restricted to concern the above presented application examples; many variations are also possible while sticking to the idea of the invention defined by the patent claims.

## Claims

1. A method for the replacement in a group of trusted certificates of a digital certificate in use with a new digital certificate, when the certificate in use granted to the certificate owner is annulled or when the digital certificate in use has expired, which method consists of the following steps:
- a signed certificate message containing the new digital certificate indicated by a new identity is received
- data is stored from said certificate message
- the said new digital certificate is verified authentic before the storage of it,
**characterized in that**
before the storage of the new digital certificate the method furthermore comprises the steps:
- an earlier identity contained in said certificate message is compared to the identity concerning the digital certificate in use, and if the identities match
- the digital certificate concerning said earlier identity is removed from the group of trusted certificates; and
- the new digital certificate indicated by the new identity in the certificate message is added to the group of trusted certificates.

2. A method in accordance with patent claim 1,
**characterized in that** before the adding of the new certificate indicated by the new identity in the certificate message to the group of trusted certificates:
- the trusted time in the certificate message concerning the new certificate is compared to the trusted time concerning the earlier certificate, and
- the new certificate is accepted only if the trusted time concerning the new certificate is newer than the trusted time concerning the earlier certificate.

3. A method in accordance with patent claim 1 or 2,
**characterized in that** the validity time of the new certificate is compared to the last known trusted time.

4. A method in accordance with any of the earlier patent claims 1, 2 or 3, **characterized by**
- sending of the trusted time data to the recipient of the certificate, and if any certificate has expired,
- a request is sent from the certificate user for a new certificate.

5. A method in accordance with any of the earlier patent claims 1, 2, 3 or 4, **characterized by** the sending of an enquiry about if the received certificate is valid.

6. A method in accordance with any of the earlier patent claims 1, 2, 3, 4 or 5, **characterized in that** if the certificate user sends a message, which recipient's identity is expired,
- the received message is rejected, and
- the new identity and/or the certificate concerning the new identity of said recipient is sent to the certificate user. ,

7. A method in accordance with any of the earlier patent claims 1, 2, 3, 4, 5 or 6, **characterized in that** if the certificate user sends a message, which recipient's identity is valid, but to the recipient has also been granted a new identity and a certificate concerning it,
- the received message is accepted, and
- the new identity and/or the certificate concerning the new identity of the said recipient is sent to the certificate user.

8. A method in accordance with claim 1 for the control of certificates stored in the identity module, each identity module comprising:
- a data handling device (1),
- a memory device (2), which is connected to said data handling device (1)
- a card certificate stored in the memory device (2),
- an application (APP), which uses the certificates stored in the identity module, and
- a data transfer device (3), which is connected to said data handling device (1) and to which a connection interface has been set up for the transfer of data between an external device and the identity module,
which method comprises the following steps:
- a signed certificate message is received to the identity module;
- data is stored from said certificate to said memory device;
- said certificate is verified authentic with said card certificate before the storage of the certificate;
**characterized in that** before the storage of the certificate the method furthermore comprises the steps:
- the earlier identity in said signed certificate message is compared to the identity concerning the certificate in use in the identity module, and if the identities match,
- the certificate concerning said earlier identity is removed from the memory device from the group of trusted certificates; and
- the new certificate indicated by the new identity in said certificate message is added to the memory device into the group of trusted certificates.

9. A method in accordance with patent claim 8, **characterized in that** before the adding of the new certificate indicated by the new identity in the certificate message to the group of trusted certificates:
- the trusted time concerning the new certificate in the certificate message is compared using the identity module to the trusted time concerning the earlier certificate, and
- accepting the new certificate only if said trusted time concerning the new certificate is newer than the trusted time concerning the earlier certificate.

10. A method in accordance with patent claim 8 or 9, **characterized in that** the validity time of the new certificate is compared to the last known trusted time using the identity module.

11. A method in accordance with any of the earlier patent claims 8, 9, or 10, **characterized in that**
- trusted time data is sent to the identity module of the certificate, and if any certificate has expired
- a request for a new certificate is sent.

12. A method in accordance with any of the earlier patent claims 8, 9, 10 or 11, **characterized in that** an enquiry is sent from the identity module about if the received certificate is valid.

13. A method in accordance with any of the earlier patent claims 8, 9, 10, 11 or 12, **characterized in that** if a message is sent from the identity module, which recipient's identity has expired,
- the received message is rejected, and
- the new identity and/or the new certificate concerning said new identity of said recipient is sent to identity module.

14. A method in accordance with any of the earlier patent claims 8, 9, 10, 11, 12 or 13 **characterized in that** if a message is sent from the identity module, which recipient's identity is valid but to which recipient a new identity and a certificate concerning it have been granted,
- the received message is accepted, and
- the new identity and/or the certificate concerning the new identity of said recipient is sent to the identity module.

15. A method in accordance with any of the earlier patent claims 8, 9, 10, 11, 12, 13 or 14 **characterized in that** the public key and the identity concerning it are stored from said certificate.

16. A method in accordance with any of the earlier patent claims 8, 9, 10, 11, 12, 13, 14 or 15 **characterized in that** said certificate is rejected if it is found untrustworthy before it is stored.

17. A method in accordance with any of the earlier patent claims 8, 9, 10, 11, 12, 13, 14, 15 or 16 **characterized in that** said certificate is rejected if it is found untrustworthy before it is used.

18. A method in accordance with any of the earlier patent claims 8, 9, 10, 11, 12, 13, 14, 15, 16 or 17 **characterized in that** the messages to be sent or/and received are mediated on the mobile phone network in a short message.

19. An identity module for the control of certificates, each identity module comprising:
- a data handling device (1),
- a memory device (2), which is connected to said data handling device (1)
- a card certificate which is stored into the memory device (2),
- an application (APP), which uses the certificates,
- a data transfer device (3), which is connected to said data handling device (1) and to which a connection interface (RP) has been set up for the transfer of data between an external device and the identity module,
- means for reception (4) for the reception of a certificate to the identity module, and
- means for storage (5) for the storage of data from said certificate to said memory device,
- means for verification (6) for the verification of authenticity with said card certificate before the storage of the certificate,
**characterized in that** the identity module furthermore consists of:
- means for comparison (7) for the comparison of an earlier identity stored in the memory device (2) to a new identity in the signed certificate message,
- means for removal (8) for the removal of the certificate belonging to the earlier identity from a group of trusted certificates,
- means for addition (9) for the adding of a new certificate indicated by the new identity in said certificate message into the group of trusted certificates.

20. An identity module in accordance with patent claim 19, **charact erized** in that the identity module comprises:
- means for comparison (7) for the comparison of the trusted time concerning the new certificate to the trusted time concerning the earlier certificate, and
- means for acceptance (10) for the acceptance of the new certificate only, if the trusted time concerning the new certificate is newer than the trusted time concerning the earlier certificate.

21. An identity module in accordance with patent claim 19 or 20, **char acterized** in that the identity module comprises means for reception (11) for the reception of trusted time data.

22. An identity module in accordance with any of the earlier patent claims 19, 20 or 21 **characterized in that** the identity module comprises means for comparison (7) for the comparison of the validity time of the new certificate to the last known trusted time.

23. An identity module in accordance with any of the earlier patent claims 19, 20, 21 or 22 **characterized in that** the identity module consists of means for enquiry (12) for the sending of an enquiry concerning the validity of the certificate.

24. An identity module in accordance with any of the earlier patent claims 19, 20, 21, 22 or 23 **characterized in that** the identity module furthermore comprises means for rejection (13) for the rejection of said certificate, if it is found untrustworthy before its storage.

25. An identity module in accordance with any of the earlier patent claims 19, 20, 21, 22, 23 or 24 **characterized in that** the identity module furthermore comprises means for rejection (13) for the rejection of said certificate, if it is found untrustworthy before its use.

26. An identity module in accordance with any of the earlier patent claims 19, 20, 21, 22, 23, 24 or 25 **characterized** for that the identity module is a mobile phone attachable subscriber identity module.

## Patentansprüche

1. Verfahren zum Ersetzen in einer Gruppe von vertrauenswürdigen Zertifikaten eines digitalen Zertifikats in Benutzung durch ein neues digitales Zertifikat, wenn das benutzte, dem Besitzer bewilligte Zertifikat annulliert wird oder wenn das benutzte digitale Zertifikat abgelaufen ist, welches Verfahren aus den folgenden Schritten besteht:
- eine signierte Zertifikat-Nachricht wird empfangen, die das neue, durch eine neue Identität gekennzeichnete digitale Zertifikat enthält
- Daten aus der Zertifikat-Nachricht werden gespeichert
- das neue digitale Zertifikat wird authentisch verifiziert, bevor es gespeichert wird, **dadurch gekennzeichnet, dass**
vor der Speicherung des neuen digitalen Zertifikats das Verfahren ferner folgende Schritte umfasst:
- eine frühere in der Zertifikat-Nachricht enthaltene Identität wird mit der das benutzte digitale Zertifikat betreffenden Identität verglichen, und wenn die Identitäten übereinstimmen
- das die frühere Identität betreffende digitale Zertifikat wird aus der Gruppe der vertrauenswürdigen Zertifikate entfernt; und
- das in der Zertifikat-Nachricht durch die neue Identität gekennzeichnete digitale Zertifikat wird zur Gruppe von vertrauenswürdigen Zertifikaten hinzugefügt.

2. Verfahren nach Patentanspruch 1, **dadurch gekennzeichnet, dass** vor dem Hinzufügen des neuen, in der Zertifikat-Nachricht durch die neue Identität gekennzeichneten Zertifikats zur Gruppe der vertrauenswürdigen Zertifikate:
- die vertrauenswürdige Zeit in der das neue Zertifikat betreffenden Zertifikat-Nachricht mit der das frühere Zertifikat betreffenden vertrauenswürdigen Zeit verglichen wird, und
- das neue Zertifikat nur dann akzeptiert wird, wenn die das neue Zertifikat betreffende vertrauenswürdige Zeit neuer ist als die das frühere Zertifikat betreffende vertrauenswürdige Zeit.

3. Verfahren nach Patentanspruch 1 oder 2, **dadurch gekennzeichnet, dass** die Gültigkeitsdauer des neuen Zertifikats mit der letzten bekannten vertrauenswürdigen Zeit verglichen wird.

4. Verfahren nach einem der vorhergehenden Patentansprüche 1, 2 oder 3, **gekennzeichnet durch**
- Versenden der Vertrauenswürdige-Zeit-Daten zum Empfänger des Zertifikats, und falls eines der Zertifikate abgelaufen ist,
- Versenden einer Anforderung eines neuen Zertifikats **durch** den Zertifikatsnutzer.

5. Verfahren nach einem der vorhergehenden Patentansprüche 1, 2, 3 oder 4, **gekennzeichnet durch** Versenden einer Anfrage, ob das empfangene Zertifikat gültig ist.

6. Verfahren nach einem der vorhergehenden Patentansprüche 1, 2, 3, 4 oder 5, **dadurch gekennzeichnet, dass** wenn der Zertifikatsnutzer eine Nachricht versendet, deren Empfängers Identität abgelaufen ist,
- die empfangene Nachricht verworfen wird, und
- die neue Identität und/oder das die neue Identität des Empfängers betreffende Zertifikat zum Zertifikatsnutzer versendet werden.

7. Verfahren nach einem der vorhergehenden Patentansprüche 1, 2, 3, 4, 5 oder 6, **dadurch gekennzeichnet, dass** wenn der Zertifikatsnutzer eine Nachricht versendet, deren Empfängers Identität gültig ist, dem Empfänger aber auch eine neue Identität und ein sie betreffendes Zertifikat bewilligt worden sind,
- die empfangene Nachricht akzeptiert wird, und
- die neue Identität und/oder das die neue Identität betreffende Zertifikat des Empfängers zum Zertifikatsnutzer versendet werden.

8. Verfahren nach Patentanspruch 1 für die Kontrolle von im Identitätsmodul gespeicherten Zertifikaten, jedes Identität Bauelement umfassend:
- eine Datenbehandlungsvorrichtung (1),
- eine Speichervorrichtung (2), die mit der Datenbehandlungsvorrichtung (1) verbunden ist,
- ein Kartenzertifikat, das in der Speichervorrichtung (2) abgelegt ist,
- eine Anwendung (APP), die die im Identitätsmodul abgelegten Zertifikate benutzt, und
- eine Datenübertragungsvorrichtung (3), die mit der Datenbehandlungsvorrichtung (1) verbunden ist und für die eine Verbindungsschnittstelle für die Übertragung von Daten zwischen einem externen Gerät und dem Identitätsmodul eingestellt ist, welches Verfahren folgende Schritte umfasst;
- eine signierte Zertifikat-Nachricht wird am Identitätsmodul empfangen;
- Daten aus dem Zertifikat werden in der Speichervorrichtung gespeichert;
- das Zertifikat wird mit dem Kartenzertifikat vor der Speicherung des Zertifikats authentisch verifiziert;
**dadurch gekennzeichnet, dass** vor der Speicherung des Zertifikats das Verfahren weiterhin die Schritte umfasst:
- die frühere Identität in der signierten Zertifikat-Nachricht wird mit der das benutzte Zertifikat im Identitätsmodul betreffenden Identität verglichen, und wenn die Identitäten übereinstimmen,
- das die frühere Identität betreffende Zertifikat aus der Speichervorrichtung aus der Gruppe von vertrauenswürdigen Zertifikaten entfernt wird; und
- das durch neue Identität in der Zertifikats-Nachricht gekennzeichnete Zertifikat wird zur Speichervorrichtung zur Gruppe von vertrauenswürdigen Zertifikaten hinzugefügt.

9. Verfahren nach Patentanspruch 8, **dadurch gekennzeichnet, dass** vor dem Hinzufügen des durch die neue Identität in der Zertifikat-Nachricht gekennzeichneten neuen Zertifikats zur Gruppe von vertrauenswürdigen Zertifikaten:
- die das neue Zertifikat in der Zertifikat-Nachricht betreffende vertrauenswürdige Zeit verglichen wird mit Hilfe des Identitätsmoduls mit der das frühere Zertifikat betreffenden vertrauenswürdigen Zeit, und
- das neue Zertifikat nur dann akzeptiert wird, wenn die das neue Zertifikat betreffende vertrauenswürdige Zeit neuer ist als die das frühere Zertifikat betreffende vertrauenswürdige Zeit.

10. Verfahren nach Patentanspruch 8 oder 9, **dadurch gekennzeichnet, dass** die Gültigkeitsdauer des neuen Zertifikats mit Hilfe des Identitätsmoduls mit der letzten bekannten vertrauenswürdigen Zeit verglichen wird.

11. Verfahren nach einem der vorhergehenden Patentansprüche 8, 9, oder 10, **dadurch gekennzeichnet, dass**
- Vertrauenswürdige-Zeit-Daten zum Identitätsmodul des Zertifikats versendet werden, und wenn ein Zertifikat abgelaufen ist,
- eine Anforderung eines neuen Zertifikats versendet wird.

12. Verfahren nach einem der vorhergehenden Patentansprüche 8, 9, 10 oder 11, **dadurch gekennzeichnet, dass** vom Identitätsmodul eine Anfrage versendet wird, ob das empfangene Zertifikat gültig ist.

13. Verfahren nach einem der vorhergehenden Patentansprüche 8, 9, 10, 11 oder 12, **dadurch gekennzeichnet, dass** wenn vom Identitätsmodul eine Nachricht versendet wird, deren Empfängers Identität abgelaufen ist,
- die empfangene Nachricht verworfen wird, und
- die neue Identität und/oder das die neue Identität des Empfängers betreffende neue Zertifikat zum Identitätsmodul versendet werden.

14. Verfahren nach einem der vorhergehenden Patentansprüche 8, 9, 10, 11, 12 oder 13 **dadurch gekennzeichnet, dass** wenn eine Nachricht vom Identitätsmodul versendet wird, deren Empfängers Identität gültig ist, für welchen Empfänger aber eine neue Identität und ein sie betreffendes Zertifikat bewilligt worden sind,
- die empfangene Nachricht akzeptiert wird, und
- die neue Identität und/oder das die neue Identität des Empfängers betreffende Zertifikat zum Identitätsmodul versendet werden.

15. Verfahren nach einem der vorhergehenden Patentansprüche 8, 9, 10, 11, 12, 13 oder 14 **dadurch gekennzeichnet, dass** der öffentliche Schlüssel und die ihn betreffende Identität aus dem Zertifikat gespeichert werden.

16. Verfahren nach einem der vorhergehenden Patentansprüche 8, 9, 10, 11, 12, 13, 14 oder 15 **dadurch gekennzeichnet, dass** das Zertifikat verworfen wird, falls es sich als nicht vertrauenswürdig erweist, bevor es gespeichert wird.

17. Verfahren nach einem der vorhergehenden Patentansprüche 8, 9, 10, 11, 12, 13, 14, 15 oder 16 **dadurch gekennzeichnet, dass** das Zertifikat verworfen wird, falls es sich als nicht vertrauenswürdig erweist, bevor es benutzt wird.

18. Verfahren nach einem der vorhergehenden Patentansprüche 8, 9, 10, 11, 12, 13, 14, 15, 16 oder 17 **dadurch gekennzeichnet, dass** die zu versendenden und/oder empfangenden Nachrichten über das Mobiltelefonnetz in einer Kurznachricht übermittelt werden.

19. Identitätsmodul für die Kontrolle von Zertifikaten, jedes Identitätsmodul umfassend:
- eine Datenbehandlungsvorrichtung (1),
- eine Speichervorrichtung (2), die mit der Datenbehandlungsvorrichtung (1) verbunden ist,
- ein Kartenzertifikat, das in der Speichervorrichtung (2) gespeichert ist,
- eine Anwendung (APP), die die Zertifikate benutzt,
- eine Datenübertragungsvorrichtung (3), die mit der Datenbehandlungsvorrichtung (1) verbunden ist und für die eine Verbindungsschnittstelle (RP) eingerichtet ist für die Übertragung von Daten zwischen einem externen Gerät und dem Identitätsmodul,
- Empfangsmittel (4) für den Empfang eines Zertifikats am Identitätsmodul, und
- Speichermittel (5) für die Speicherung von Daten aus dem Zertifikat in der Speichervorrichtung,
- Verifiziermittel (6) für die die Verifizierung der Authentizität mit dem Kartenzertifikat vor der Speicherung des Zertifikats, **dadurch gekennzeichnet, dass** das Identitätsmodul des Weiteren umfasst:
- Vergleichmittel (7) für den Vergleich einer in der Speichervorrichtung (2) gespeicherten früheren Identität mit einer neuen Identität in der signierten Zertifikat-Nachricht,
- Entfernungsmittel (8) für die Entfernung des zur früheren Identität gehörenden Zertifikats aus einer Gruppe von vertrauenswürdigen Zertifikaten,
- Hinzufügungsmittel (9) für das Hinzufügen eines durch die neue Identität in der Zertifikat-Nachricht gekennzeichneten neuen Zertifikats zur Gruppe von vertrauenswürdigen Zertifikaten.

20. Identitätsmodul nach Patentanspruch 19, **dadurch gekennzeichnet, dass** das Identitätsmodul umfasst:
- Vergleichmittel (7) für den Vergleich der das neue Zertifikat betreffenden vertrauenswürdigen Zeit mit der das frühere Zertifikat betreffenden vertrauenswürdigen Zeit, und
- Akzeptiermittel (10) für die Annahme des neuen Zertifikats nur, wenn die das neue Zertifikat betreffende Zeit neuer als die das frühere Zertifikat betreffende vertrauenswürdige Zeit ist.

21. Identitätsmodul nach Patentanspruch 19 oder 20, **dadurch gekennzeichnet, dass** das Identitätsmodul Empfangsmittel (11) für den Empfang (11) von Vertrauenswürdige-Zeit-Daten umfasst.

22. Identitätsmodul nach einem der vorhergehenden Patentansprüche 19, 20 oder 21, **dadurch gekennzeichnet, dass** das Identitätsmodul Vergleichmittel (7) für den Vergleich der Gültigkeitsdauer des neuen Zertifikats mit der letzten bekannten vertrauenswürdigen Zeit umfasst.

23. Identitätsmodul nach einem der vorhergehenden Patentansprüche 19, 20, 21 oder 22, **dadurch gekennzeichnet, dass** das Identitätsmodul Anfragemittel (12) für das Versenden einer die Gültigkeit des Zertifikats betreffenden Anfrage umfasst.

24. Identitätsmodul nach einem der vorhergehenden Patentansprüche 19, 20, 21, 22 oder 23, **dadurch gekennzeichnet, dass** das Identitätsmodul des Weiteren Verwerfungsmittel (13) für das Verwerfen des Zertifikats umfasst, falls es sich vor seiner Speicherung als nicht vertrauenswürdig erweist.

25. Identitätsmodul nach einem der vorhergehenden Patentansprüche 19, 20, 21, 22, 23 oder 24, **dadurch gekennzeichnet, dass** das Identitätsmodul des Weiteren Verwerfungsmittel (13) für das Verwerfen des Zertifikats umfasst, falls es sich vor seiner Benutzung als nicht vertrauenswürdig erweist.

26. Identitätsmodul nach einem der vorhergehenden Patentansprüche 19, 20, 21, 22, 23, 24 oder 25, **dadurch gekennzeichnet, dass** das Identitätsmodul ein an einem Mobiltelefon ansteckbares Teilnehmer-Identitätsmodul ist.

## Revendications

1. Procédé pour remplacer dans un groupe de certificats sécurisés d'un certificat numérique en usage par un nouveau certificat numérique, lorsque le certificat en usage associé au détenteur du certificat est annulé ou quand le certificat numérique en usage est périmé, lequel procédé se compose des phases suivantes :
- réception d'un message de certificat signé contenant le nouveau certificat numérique indiqué par une nouvelle identité
- les données sont mémorisées à partir dudit message de certificat
- l'authenticité dudit nouveau certificat numérique est vérifiée avant sa mémorisation,
**caractérisé en ce que**
avant la mémorisation du nouveau certificat numérique le procédé comprend encore les phases suivantes :
- une identité antérieure contenue dans ledit message de certificat est comparée à l'identité concernant le certificat numérique en usage, et si les identités coïncident
- le certificat numérique concernant ladite identité antérieure est supprimé du groupe des certificats sécurisés ; et
- le nouveau certificat numérique indiqué par la nouvelle identité dans le message de certificat, est ajouté au groupe des certificats sécurisés.

2. Procédé selon la revendication 1,
**caractérisé en ce qu'**avant d'ajouter le nouveau certificat indiqué par la nouvelle identité dans le message de certificat au groupe des certificats sécurisés :
- le temps sécurisé dans le message de certificat concernant le nouveau certificat est comparé au temps sécurisé concernant le certificat antérieur, et
- le nouveau certificat est accepté uniquement si le temps sécurisé concernant le nouveau certificat est plus récent que le temps sécurisé concernant le certificat antérieur.

3. Procédé selon la revendication 1 ou 2,
**caractérisé en ce que** le temps de validité du nouveau certificat est comparé au dernier temps sécurisé connu.

4. Procédé selon l'une quelconque des revendications précédentes 1, 2 ou 3, **caractérisé en ce que**
- la donnée du temps sécurisé est envoyée au destinataire du certificat, et si l'un des certificats est périmé,
- l'utilisateur du certificat envoie une requête pour un nouveau certificat.

5. Procédé selon l'une quelconque des revendications précédentes 1, 2, 3 ou 4, **caractérisé en ce qu'**une demande concernant la validité du certificat est envoyée.

6. Procédé selon l'une quelconque des revendications précédentes 1, 2, 3, 4 ou 5, **caractérisé en ce que** l'utilisateur du certificat envoie un message, l'identité de quel destinataire est périmée,
- le message reçu est refusé, et
- la nouvelle identité et/ou le certificat concernant la nouvelle identité dudit destinataire est envoyé à l'utilisateur du certificat.

7. Procédé selon l'une quelconque des revendications précédentes 1, 2, 3, 4, 5 ou 6, **caractérisé en ce que** l'utilisateur du certificat envoie un message, l'identité de quel destinataire est valide, mais au destinataire ont également été donnés une nouvelle identité et un certificat la concernant,
- le message reçu est accepté, et
- la nouvelle identité et/ou le certificat concernant la nouvelle identité dudit destinataire est envoyé à l'utilisateur du certificat.

8. Procédé selon la revendication 1, 2, 3, 4, 5 ou 6 pour le contrôle des certificats mémorisés dans le module d'identité, chaque module d'identité comprenant :
- dispositif de traitement de données (1),
- dispositif de mémorisation (2), qui est connecté au dispositif de traitement de données (1)
- un certificat de carte stocké dans le dispositif de mémorisation (2),
- une application (APP), qui utilise les certificats mémorisés dans le module d'identité, et
un dispositif de transfert de données (3), qui est connecté au dispositif de traitement de données (1) et auquel a été installé une interface de connexion pour le transfert de données entre un dispositif externe et le module d'identité, lequel procédé comprend les phases suivantes :
- un message de certificat signé est reçu au module d'identité ;
- les données sont mémorisées à partir dudit certificat audit dispositif de mémorisation ;
- l'authenticité dudit certificat est vérifiée avec ledit certificat de carte avant la mémorisation du message ;
**caractérisé en ce qu'**avant la mémorisation du certificat le procédé comprend encore les phases suivantes :
- l'identité antérieure dans ledit message de certificat signé est comparée à l'identité concernant le certificat en usage dans le module d'identité,
- et si les identités coïncident,
- le certificat concernant ladite identité antérieure est effacé du dispositif de mémorisation du groupe des certificats sécurisés ; et
- le nouveau certificat indiqué par la nouvelle identité dans ledit message de certificat est ajouté au dispositif de mémorisation dans le groupe des certificats sécurisés.

9. Procédé selon la revendication 8, **caractérisé en ce qu'**avant d'ajouter le nouveau certificat indiqué par la nouvelle identité dans le message de certificat au groupe des certificats sécurisés :
- le temps sécurisé concernant le nouveau certificat dans le message de certificat est comparé en utilisant le module d'identité, au temps sécurisé concernant le certificat antérieur, et
- le nouveau certificat est accepté uniquement si ledit temps sécurisé concernant le nouveau certificat est plus récent que le temps sécurisé concernant le certificat antérieur.

10. Procédé selon la revendication 8 ou 9,
**caractérisé en ce que** le temps de validité du nouveau certificat est comparé au dernier temps sécurisé connu en utilisant le module d'identité.

11. Procédé selon l'une quelconque des revendications précédentes 8, 9 ou 10, **caractérisé en ce que**
la donnée du temps sécurisé est envoyée au module d'identité du certificat, et si un certificat est périmé,
- une requête pour un nouveau certificat est envoyée.

12. Procédé selon l'une quelconque des revendications précédentes 8, 9, 10 ou 11, **caractérisé en ce qu'**une demande est envoyée à partir du module d'identité pour vérifier la validité du certificat reçu.

13. Procédé selon l'une quelconque des revendications précédentes 8, 9, 10, 11 ou 12, **caractérisé en ce que** si un message est envoyé à partir du module d'identité, quelle identité du destinataire est périmée,
- le message reçu est refusé, et
- la nouvelle identité et/ou le certificat concernant ladite nouvelle identité dudit destinataire est envoyé au module d'identité.

14. Procédé selon l'une quelconque des revendications précédentes 8, 9, 10, 11, 12 ou 13, **caractérisé en ce que** si un message est envoyé à partir du module d'identité, l'identité duquel destinataire est valide, mais auquel destinataire une nouvelle identité et un certificat la concernant ont été accordés,
- le message reçu est accepté, et
- la nouvelle identité et/ou le certificat concernant ladite nouvelle identité dudit destinataire est envoyé au module d'identité.

15. Procédé selon l'une quelconque des revendications précédentes 8, 9, 10, 11, 12, 13 ou 14, **caractérisé en ce que** la clef publique et l'identité la concernant sont mémorisées dans le certificat.

16. Procédé selon l'une quelconque des revendications précédentes 8, 9, 10, 11, 12, 13, 14 ou 15, **caractérisé en ce que** ledit certificat est rejeté, s'il s'avère douteux avant d'être mémorisé.

17. Procédé selon l'une quelconque des revendications précédentes 8, 9, 10, 11, 12, 13, 14, 15 ou 16, **caractérisé en ce que** ledit certificat est refusé, s'il s'avère douteux avant d'être utilisé.

18. Procédé selon l'une quelconque des revendications précédentes 8, 9, 10, 11, 12, 13, 14, 15, 16 ou 17, **caractérisé en ce que** les messages à envoyer ou/et à recevoir sont diffusés sur le réseau de téléphone mobile par un message texte (SM).

19. Module d'identité pour le contrôle des certificats, chaque module d'identité comprenant :
- un dispositif de traitement de données (1),
- un dispositif de mémorisation (2), qui est connecté au dispositif de traitement de données (1)
- un certificat de carte qui est stocké dans le dispositif de mémorisation (2),
- une application (APP) qui utilise les certificats,
- un dispositif de transfert de données (3), qui est connecté audit dispositif de traitement de données (1) et auquel a été installé une interface de connexion (RP) pour le transfert des données entre un dispositif externe et le module d'identité,
- moyens de réception (4) pour recevoir un certificat au module d'identité, et
- moyens pour mémoriser des données à partir dudit certificat audit dispositif de mémorisation,
- moyens de vérification (6) pour vérifier l'authenticité avec ledit certificat de carte avant de mémoriser le certificat, **caractérisé en ce que** le module d'identité comprend encore :
- moyens de comparaison (7) pour comparer une identité antérieure mémorisée dans le dispositif de mémorisation (2) à une nouvelle identité dans le message de certificat signé
- moyens de retrait (8) pour retirer le certificat appartenant à l'identité antérieure d'un groupe de certificats sécurisés,
- moyens d'addition (9) pour ajouter un nouveau certificat indiqué par la nouvelle identité dans ledit message de certificat, au groupe des messages sécurisés.

20. Module d'identité selon la revendication 19, **caractérisé en ce que** le module d'identité comprend :
- moyens de comparaison (7) pour comparer le temps sécurisé concernant le nouveau certificat au temps sécurisé concernant le certificat antérieur, et
- moyens d'acceptation (10) pour accepter le nouveau certificat uniquement, si le temps sécurisé concernant le nouveau certificat est plus récent que le temps sécurisé concernant le certificat antérieur.

21. Module d'identité selon la revendication 19 ou 20, **caractérisé en ce que** le module d'identité comprend des moyens de réception (11) pour recevoir des données relatives au temps sécurisé.

22. Module d'identité selon l'une quelconque des revendications précédentes 19, 20 ou 21, **caractérisé en ce que** le module d'identité comprend des moyens de comparaison (7) pour comparer le temps de validité du nouveau certificat au dernier temps sécurisé connu.

23. Module d'identité selon l'une quelconque des revendications précédentes 19, 20, 21 ou 22, **caractérisé en ce que** le module d'identité se compose de moyens de demande (12) pour envoyer une demande concernant la validité du certificat.

24. Module d'identité selon l'une quelconque des revendications précédentes 19, 20, 21, 22 ou 23 **caractérisé en ce que** le module d'identité comprend encore des moyens de refus (13) pour refuser ledit certificat, si celui-ci s'avère douteux avant sa mémorisation.

25. Module d'identité selon l'une quelconque des revendications précédentes 19, 20, 21, 22, 23 ou 24, **caractérisé en ce que** le module d'identité comprend encore des moyens de refus (13) pour refuser ledit certificat, si celui-ci s'avère douteux avant son utilisation.

26. Module d'identité selon l'une quelconque des revendications précédentes 19, 20, 21, 22, 23, 24 ou 25 **caractérisé en ce que** le module d'identité est un module d'identité amovible de l'abonné de téléphone mobile.
